Europäisches Patentamt

European Patent Office

Office européen des brevets

(11) Veröffentlichungsnummer: **0 308 958 B1**

(12) **EUROPÄISCHE PATENTSCHRIFT**

(45) Veröffentlichungstag der Patentschrift: **23.12.92**

(51) Int. Cl.⁵: **F16G 13/16**

(21) Anmeldenummer: **88115687.1**

(22) Anmeldetag: **23.09.88**

(54) **Energieführungskette.**

(30) Priorität: **25.09.87 DE 3732355**

(43) Veröffentlichungstag der Anmeldung:
**29.03.89 Patentblatt 89/13**

(45) Bekanntmachung des Hinweises auf die
Patenterteilung:
**23.12.92 Patentblatt 92/52**

(84) Benannte Vertragsstaaten:
**AT BE CH DE ES FR GB GR IT LI LU NL SE**

(56) Entgegenhaltungen:
**EP-A- 0 217 086       DE-A- 2 417 353**
**DE-A- 3 613 431       DE-B- 1 273 952**
**DE-C- 3 516 448       DE-U- 8 524 845**
**DE-U- 8 703 481       FR-A- 2 200 929**

(73) Patentinhaber: **CARRIEFLEX KUNSTSTOFF-
TECHNIK GMBH
Matthias-Oechsler-Strasse 17
W-8800 Ansbach(DE)**

(72) Erfinder: **Mang, Wolf Matthias
Kolbergerstrasse 39
W-8000 München 80(DE)**

(74) Vertreter: **Patentanwälte Czowalla. Matschkur
& Partner
Dr.-Kurt-Schumacher-Strasse 23 Postfach
9109
W-8500 Nürnberg 11(DE)**

Rank Xerox (UK) Business Services

## Beschreibung

Die Erfindung bezieht sich auf eine Energieführungskette zur Führung von Energieleitern, insbesondere Kabeln und Schläuchen, deren Kettenglieder kastenförmig ausgebildet und abwechselnd mit Zapfen und kreisförmigen Öffnungen versehen sind, wobei die Zapfen eines Kettengliedes in die Öffnungen des benachbarten Kettengliedes eingreifen und die Verschwenkbarkeit aufeinanderfolgender Kettenglieder gegeneinander - von denen jedes aus zwei Seitenplatten und zwei gleich ausgebildeten, im Querschnitt C-förmigen Querstegen aus thermoplastischem Kunststoff zusammengesteckt ist - durch Anschläge begrenzt ist und wobei die Kettenglieder als modulares System aufgebaut sind.

Bei den neuesten im Handel befindlichen Energieführungsketten sind die einzelnen Kettenglieder entweder einstückig gespritzte Bauteile aus Kunststoff oder aber sie umfassen dreiseitig zusammenhängende Spritzgießteile, so daß sie entweder überhaupt nicht oder nur von einer Seite her durch Öffnungen eines Querstegs zugänglich sind. Dies hat neben der Kompliziertheit der notwendigen Spritzgießformen den Nachteil, daß bei einstückigen Kettengliedern die Energieleiter mühsam durch die Kette gefädelt werden müssen und nicht einfach von der Seite her für Reparaturen, Auswechslungsarbeiten od. dgl. zugänglich sind. Bei teilweise zusammenhängenden Wänden der Kettenglieder ist dieser Nachteil zwar nicht im vollen Umfang gegeben, doch ist es in vielen Fällen ebenfalls störend, wenn man nur von oben oder unten, je nach Anordnung der Kettenglieder, an die Energieleitungen herankommt.

Um diese Schwierigkeiten zu beseitigen, sind auch bereits Energieführungsketten der eingangs genannten Art vorgeschlagen worden (man vergleiche hierzu beispielsweise die DE-A-35 16 448 sowie das DE-U-85 24 845), bei denen jedes Kettenglied aus zwei Seitenteilen und zwei Querstegen zusammengesteckt ist, so daß sowohl der eine als auch der andere Quersteg wahlweise gelöst werden kann und somit von beiden Seiten her eine Zugangsmoglichkeit zu den Energieleitern gegeben ist. Bei diesen bekannten Energieführungsketten sind die Seitenteile spiegelbildlich gleich ausgebildet, so daß für die Fertigung unterschiedliche Spritzgießformen benötigt werden. Hinzu kommt noch, daß für die verschiedenen Ausführungsformen, Kette oder geschlossenes Rohr, sowie unterschiedliche Größen und Breiten, jeweils gesonderte Formteile vorrätig gehalten werden müssen.

Aus dem deutschen Gebrauchsmuster DE-U-87 03 481 ist zwar bereits im Zusammenhang mit Energieführungsketten eine Konstruktion bekannt geworden, bei der Mittel- oder Endbefestigungsteile, die auf einer Unterlage gehaltert sind, während die übrigen Kettenglieder ja bewußt beweglich sein sollen, identisch ausgebildet und nur um 180° versetzt angeordnet sind, was aber dort nur dadurch möglich ist, daß keine die Seitenteile zu einem kastenförmigen Bauteil zusammenfassende, verrastend aufsteckbare Querstege vorgesehen zu sein brauchen, da ja der Abstand durch das Anschrauben auf der Unterlage gewährleistet wird.

Der Erfindung liegt daher die Aufgabe zugrunde, eine Energieführungskette der eingangs genannten Art zu auszugestalten, daß mit wenigen einfach zu montierenden Bauteilen die verschiedenartigsten vorstehend angedeuteten Anforderungen gleichzeitig befriedigt werden können.

Zur Lösung dieser Aufgabe ist erfindungsgemäß vorgesehen, daß auf den Seiten um 180° versetzt zueinander angeordnete, identische Seitenteile mit beidseits der Plattenebene angeordneten Zapfen vorgesehen sind, deren mit den Querstegenden verrastende Vorsprünge symmetrisch zur Mittelebene zwischen den Achsen der Schwenkzapfen bzw. Öffnungen ausgebildet sind und daß die Endabschnitte der Querstege mit Rastwülsten versehene U-Klammern bilden, die zwischen dem Seitenteil und einer - eine Abzugsbegrenzung bildenden - verbreiterten Stirnwand auf die Vorsprünge der Seitenteile aufsprengbar sind, die - ebenso wie die Stirnwand - mit nach oben abgeschrägten Seitenkanten versehen sind.

Durch die konsequente Verwendung von identischen Seitenteilen für sämtliche Kettenglieder der Energieführungskette - bei der bereits angesprochenen deutschen Gebrauchsmusterschrift DE-U 87 03 481 konnte diese Ausbildung ja nur für End- oder Mittelbefestigungsteile vorgesehen sein - lassen sich in sehr einfacher Weise und mit extrem wenig unterschiedlichen Bauteilen Energieführungsketten herstellen, die nicht nur als fertige Ketten vorgefertigt geliefert werden, sondern die auch sehr einfach um bereits vorhandene endseitig befestigte Leitungen herumgebaut werden können, wobei die Kettenglieder wahlweise - selbst bei Ausbildung der Querstege als einander überlappende Deckel - auf zwei einander gegenüberliegenden Seiten (bei der üblichen Anordnung solcher Ketten oben und unten) öffenbar sind.

Die erfindungsgemäße Ausbildung einer Energieführungskette benötigt nur einen Typ vom Quersteg und einen Typ von Seitenteilen, wobei durch die erfindungsgemäße Ausgestaltung der speziellen Rastverbindung zwischen Querstegen und Seitenteilen die Einfachheit und Vielseitigkeit noch erheblich gesteigert wird.

Diese Ausbildung der Steckverbindung ergibt nicht nur eine sehr einfache formtechnische Ausbildung der jeweiligen Steckverbindungteile an den Querstegen bzw. Seitenteilen, sondern sie ermöglicht auch ein sehr einfaches Austauschen eines "normalen" Querstegs, bei dem die Energieführungskette teilweise beidseits geöffnet bleibt, gegen einen Deckel, derart, daß aneinanderstoßende Deckel sich teilweise überlappen und somit ein geschlossenes Rohr anstelle einer offenen Kette entsteht. Dabei lassen sich durch die Abschrägung der Seitenkanten, insbesondere auch der Seitenkanten der Stirnwand, diese Deckel auch nachträglich mitten aus dem fertigen Verbund der Kette einzeln lösen und austauschen, so daß an beliebiger Stelle auch bei geschlossenen Rohrketten die Zugänglichkeit der darin untergebrachten Energieleitungen gewährleistet ist.

Um die Wandstärke der Querstege großhalten zu können, so daß eine hohe mechanische Stabilität gegeben ist, und gleichwohl das genannte klammerartige Aufstecken durchführen zu können, ist nach einem weiteren Merkmal der Erfindung vorgesehen, daß die Endabschnitte der Querstege mit, die federnden Schenkel der U-Klammern bildenden, Schlitzen versehen sind.

Dabei liegt es auch im Rahmen der Erfindung, daß die Querstege einen, vorzugsweise verschmälerten U-förmigen Mittelabschnitt mit Innenverzahnungen der Seitenschenkel zur verstellbaren Halterung von Trennstegen aufweisen, wobei bevorzugt die Trennstege an beiden Eingriffsenden mit verbreiterten, U-förmigen Gleiteingriffsköpfen mit im Übergangsbereich zum Stegmittelabschnitt angeordneten Nasen zum Eingreifen in die Innenverzahnung der Querstege versehen sein können. Die verbreiterten Gleiteingriffsköpfe verhindern ein Verkippen und Ausklinken der Trennstege, so daß in jedem Fall gewährleistet bleibt, daß durch sie verschiedene, innerhalb einer Energieführungskette untergebrachte Leitungen seitlich auswandern und über den anderen lagern oder an diesen scheuern können.

Diese Trennung und saubere Geradeführung der Energieleitungen läßt sich dabei noch weiter verbessern, indem man auf die Trennstege Schaumstoff- oder Moosgummistreifen aufklebt, welche die zwischen zwei Trennstegen angeordneten Leitung jeweils elastisch klemmend haltern und ausrichten. Die Trennstege sind so konzipiert, daß das Aufbringen der Schaumstoff- oder Moosgummistreifen in einem automatischen, kontinuierlich arbeitenden Verfahren möglich ist.

In einer Weiterbildung der Erfindung ist vorgesehen, daß die Zapfen zur Verbindung benachbarter Ketten durchbohrt sind, so daß jeweils zwei oder mehrere parallel laufende Ketten über Querbolzen miteinander verbunden werden können, so daß eine gleichförmige Bewegung gegeben und insbesondere auch unter ungünstigsten Bedingungen ein Verhaken und daraus resultierende Betriebsstörungen vermieden sind.

Im Hinblick auf die teilweise hohen mechanischen Anforderungen, denen derartige Energieführungsketten unter den rauhen Betriebsbedingungen, in denen sie eingesetzt werden, unterworfen sind, sollen die Seitenteile und die Querstege erfingundgsgemäß aus glasfaser- oder kohlefaserverstärktem Polyamid bestehen, wobei die Anschlagkanten dieser sehr harten und abriebfesten Bauteile dann mit Vorteil mit einem vorzugsweise aufgespritzten Dämpfungsüberzug bzw. mit angespritzten Dämpfungszonen aus einem weicheren Kunststoff versehen sein können.

Für die Steckverbindung der Querstege mit den Seitenteilen ist in weiterer Ausgestaltung der Erfindung vorgesehen, daß die Querstege aus zwei Teilen zusammensteckbar sind, von denen das eine Teil einen, den Mittelabschnitt mit Verzahnungen für Trennstege bildenden abtrennbaren Langen Steg und das andere eine dessen Ende halternd aufnehmende, mit Gegenverzahnungen versehene Ausnehmung aufweist.

Durch diese zweiteilige Ausbildung der Querstege kann durch einfaches Ablängen des Stegs des einen Teils jede beliebige Breite der Querstege eingestellt werden, so daß je nach den Anforderungen, insbesondere je nach der Zahl der in einer solchen Kette unterzubringenden Leitungen, ein mehr oder weniger breiter Quersteg gebildet wird. Diese Ausbildung hat dabei sogar den Vorteil, daß man auch nachträglich, d.h. wenn man eine bestehende Energieführungskette erweitern will, dies durch bloßen Austausch der Querstege erreichen kann, wobei hierfür nicht komplizierte Formen für entsprechend längere Querstege vorhanden sein müssen, sondern einfach der eine handelsübliche Typ von zweiteiligen Querstegen einsetzbar ist. Man schneidet in diesem Fall eben die langen angespritzten Mittelstege entsprechend weniger ab und erhält dann insgesamt einen breiteren Quersteg. Durch die entsprechende Ausgestaltung des Mittelsteges kann der gleiche Trennsteg wiefür die festen Breiten Verwendung finden.

In diesem Zusammenhang steht auch eine weitere erfindungsgemäße Ausgestaltung, bei der der Mittelabschnitt der Querstege gegenüber den Aufsteckenden nach oben abgekröpft ist. Durch eine solche Abkröpfung läßt sich die nutzbare Höhe zwischen den Mittelabschnitten der beiden einander gegenüberliegenden Querstege eines Kettengliedes vergrößern, so daß entsprechend dickere Leitungen in einer Energieführungskette untergebracht werden können. Bei Beachtung der Längsverstellbarkeit der Querstege läßt sich auf diese Weise mit extrem wenig Bauteilen jede beliebige Größe einer Energieführungskette sehr einfach realisieren.

In entsprechender Weise kann auch vorgesehen sein, daß die zur Bildung einer geschlossenen Kette (Rohr) verbreitert als Deckel ausgebildeten Querstege Zweikomponenten-Bauteile sind, die im Überlappungsbereich auf einer Seite aus weicherem Kunststoff bestehende, Dichtlippen bildende, Abschnitte aufweisen.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

Fig. 1     eine schematisierte Seitenansicht einer erfindungsgemäßen Energieführungskette,

Fig. 2     die Inneneinsicht eines Seitenteils eines Kettenglieds,

Fig. 3     eine Aufsicht auf ein Seitenteil,

Fig. 4     eine Außenansicht eines Seitenteils eines Kettengliedes,

Fig. 5     eine perspektivische Explosionsdarstellung zweier um 180° gegeneinander versetzter Seitenteile eines Kettenglieds mit einem der zu ihrer Verbindung dienenden Querstege,

Fig. 6     eine Stirnansicht eines zusammengesteckten Kettengliedes in Richtung des Pfeils VI in Fig. 5,

Fig. 7     einen Schnitt im Bereich der Steckverbindung längs der Linie VII-VII in Fig. 6,

Fig. 8     eine Innenansicht eines Querstegs entsprechend dem Pfeil VIII in Fig. 6,

Fig. 9     eine Innenansicht eines zweiteiligen, aus zwei Abschnitten zusammengesteckten Querstegs,

Fig. 10    einen Schnitt längs der Linie X-X in Fig. 6 mit einem zwischen die Querstege eingesetzten Trennsteg,

Fig. 11    eine gegenüber Fig. 10 um 180° versetzte Ansicht des Trennstegs, und

Fig. 12    einen Längsschnitt durch eine Energieführungskette, bei der die Querstege durch Deckel ersetzt sind, so daß die Energieführungskette ein geschlossenes Rohr bildet.

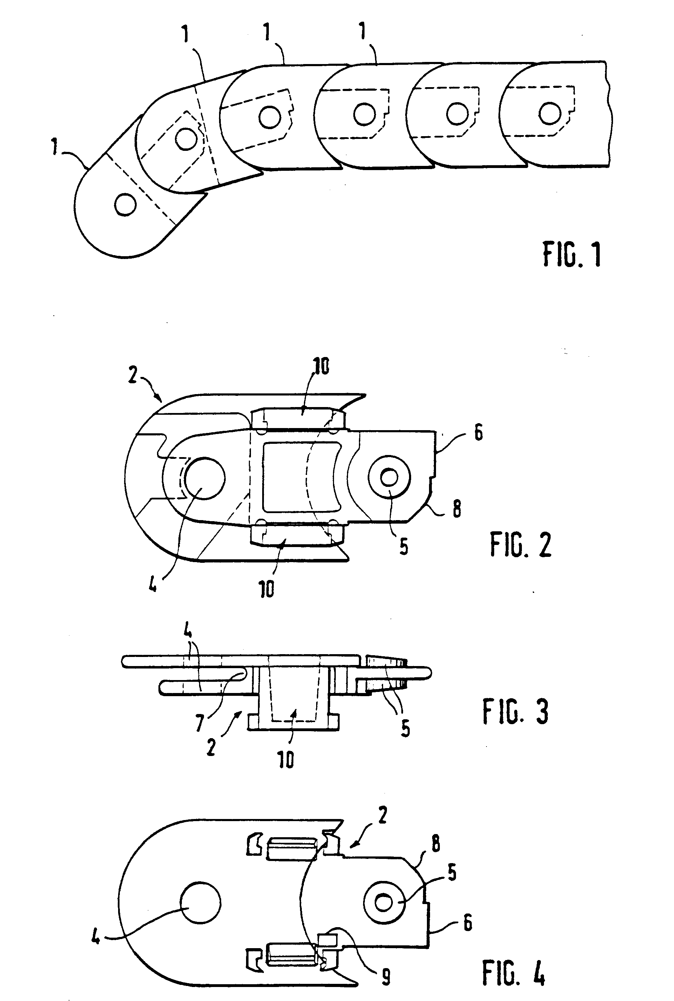

Die zum Aufbau einer Energieführungskette dienenden kastenförmigen Kettenglieder 1 bestehen aus jeweils zwei identischen, lediglich um 180° versetzten Seitenteilen 2, die durch aufsteckbare Querstege 3 miteinander verbunden sind. Die Seitenteile 2 sind am einen gegabelten Ende mit Öffnungen 4 und am anderen Ende mit beidseits überstehenden Zapfen 5 versehen, wobei innerhalb einer Kette (Fig. 1) jeweils die Zapfen 5 am Ende des einen Seitenteils in die Öffnungen 4 des Seitenteils 2 des anderen Kettengliedes 1 eingreifen. Die Kante 6, die an der Kante 7 des jeweiligen Gegenbauteils anschlägt, bildet die Geradausrichtung, d.h. den Anschlagwinkel für die gerade ausgerichtete Energieführungskette, während die Kante 8 eine Anschlagkante zur Begrenzung des Schwenkwinkels darstellt. Für diese Schwenkstellung bildet der Ansatz 9 einen zusätzlichen Begrenzungsanschlag.

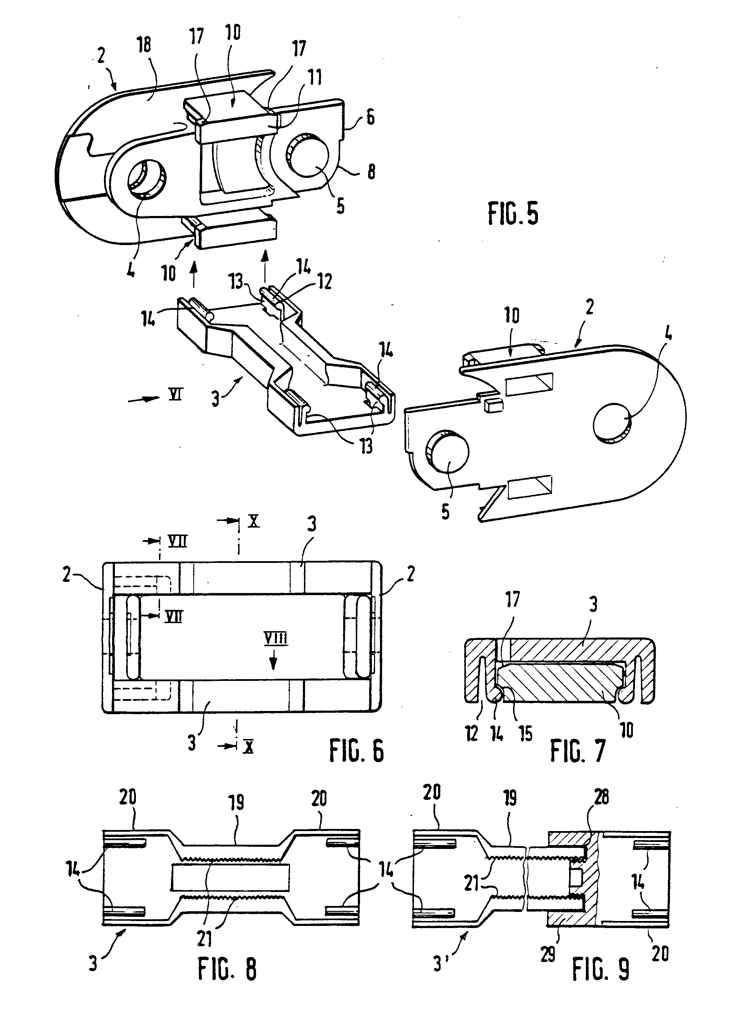

Auf der Innenseite der Seitenteile 2 sind oben und unten Vorsprünge 10 angeformt, die zum Aufstecken der Querstege 3 dienen. Diese Vorsprünge 10 sind symmetrisch bezüglich der Mittelebene zwischen der Achse der Öffnungen 4 und der Achse der Schwenkzapfen 5 ausgebildet, so daß ein Kettenglied aus zwei um 180° gegeneinander versetzt orientierten identisch ausgebildeten Seitenteilen 2 mit Hilfe zweier Querstege 3 zusammengesteckt werden kann (vergl. Fig. 5).

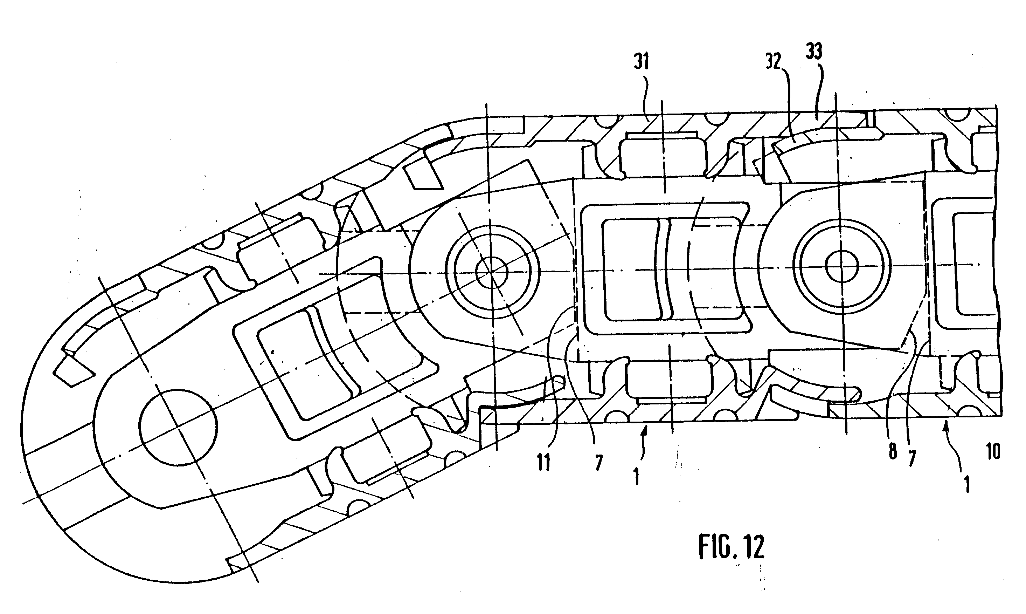

Die Vorsprünge 10 sind auf der Innenseite mit einer verbreiterten Stirnplatte 11 versehen, die, wie aus der nachfolgenden Beschreibung noch deutlich werden wird, als Abzugsbegrenzung für die aufgesteckten Enden der Querstege 3 dient. Zu diesem Zweck sind die Enden der querschnittlich U-förmigen Querstege 3 mit Schlitzen 12 versehen, durch welche federnd verschwenkbare Klammern 13 gebildet werden, die am freien Ende mit Rastwülsten 14 versehen sind. Diese Rastwülste 14 hintergreifen die Vorsprünge 10 in Einmuldungen 15 auf der Unterseite, wobei das Auffedern und damit das Aufsprengen erleichtert wird. Diese Abschrägungen 16, die als entsprechende Abschrägungen 17 auch bei den Stirnwänden 11 vorgesehen sind, ermöglichen darüber hinaus - vergl. Fig. 12 - das weiter unten noch zu beschreibende Verschwenken und Lösen von Deckeln zur Umwandlung einer offenen Energieleiterkette in ein geschlossenes Rohr. Die Länge der Klammerschenkel 13 entspricht selbstverständlich - mit Ausnahme eines geringen Spiels - dem Abstand der Stirnwand 11 von der Innenfläche 18 der Seitenwand.

Die Mittelabschnitte 19 der Querstege 3 sind gegenüber den als Steckerteile zum Aufstecken auf die Vorsprünge 10 ausgebildeten Endabschnitten 20 verschmälert ausgebildet und auf den einander zugekehrten Innenseiten ihrer Schenkel mit Zähnungen 21 versehen, die zur verstellbaren Rasthalterung von Trennstegen 22 dienen. Diese Trennstege 22 sind mit verbreiterten U-förmig geschlitzten Gleiteingriffsköpfen 23 versehen, die im Übergangsbereich zum Stegmittelabschnitt 24 Nasen 25 zum Eingreifen in die Verzahnungen 21 tragen. Durch derartige infolge ihrer Gleiteingriffsköpfe gegen ein Verkippen und Ausklinken geschützten Trennstege läßt sich eine individuelle Unterteilung des Innenraums zur Aufnahme und sauberen Geradführung der verschiedenen Energieleitungen erzielen. Dabei können, was in Fig. 11 gestrichelt angedeutet ist, auf die Trennstege auch Streifen 26 aus Schaumstoff oder Moosgummi aufgeklebt sein, um die Geradführung der Energieleitungen noch weiter zu verbessern. Gegebenenfalls können diese, wie es rechts in Fig. 11 angedeutet ist, sogar entsprechend der Krümmung der zu führenden Energieleitung geformte Stirnflächen 27 aufweisen.

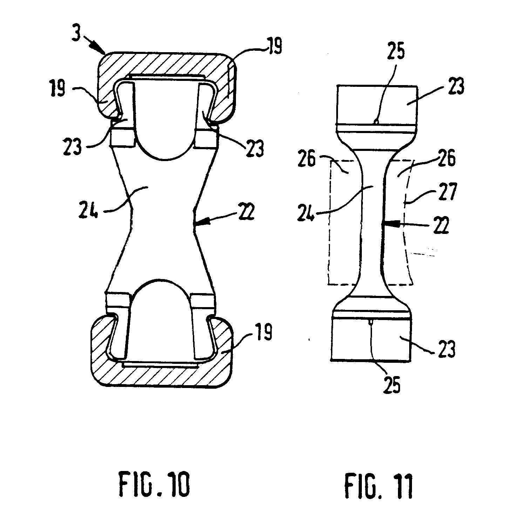

In Fig. 9 erkennt man eine zweiteilige Ausführung eines Querstegs 3', wobei das eine Teil aus einem der Aufsteckenden 20 und einem sehr langen angespritzten Mittelabschnitt 19 besteht, während das andere Bauteil auf dem zweiten Aufsteckende 20 mit einem Aufnahmabschnitt 29 mit Gegenverzahnungen 30 für die Innenverzahnung 21 ausgebildet ist. Durch Ablängen des Mittelabschnitts 19 des einen Bauteils und anschließendes Einsetzen in die Aufnahme des Gegenbauteils lassen sich beliebige Breiten der mit Hilfe solcher Querstege 3' zusammengesetzten Kettenglieder erzielen, so daß nicht für unterschiedliche Breiten jeweils aufwendige unterschiedliche Formen und Größen vorrätig gehalten werden müssen.

Die Anordnung der Verzahnungen 21 für die Trennstege 22 auf den Innenseiten der Schenkel der Mittelabschnitte 19 der Querstege 3, 3' hat dabei den Vorteil, daß diese Verzahnungen sich nicht durch Schmutz zusetzen können, wie es bei bekannten Energieführungsketten der Fall ist, bei denen derartige Trennstegverzahnungen am Boden der U-förmigen Querstege angeordnet sind.

In Fig. 12 erkennt man eine Abwandlung der in den Figuren 1 bis 11 dargestellten offenen Energieführungskette dahingehend, daß anstelle der relativ schmalen Querstege 3, 3' Deckel 31 vorgesehen sind, wobei sich die Deckel aneinanderstoßender Kettenglieder 1 teilweise überlappen. Dabei kann ggfs. vorgesehen sein, daß die Deckel 31 als Zweikomponenten-Bauteile ausgebildet sind, wobei die einen Enden 32, die unter die Gegenenden 33 zu liegen kommen, aus einem weicheren Kunststoff gespritzt sind, so daß sie elastisch leicht verformbar wie eine Dichtlippe unter dem Abschnitt 33 des benachbarten Deckels anliegen, der im übrigen, wie auch die Seitenwände und die Querstege 3, 3' der anderen Ausführungsformen, bevorzugt aus glasfaserverstärktem oder kohlefaserverstärktem Polyamid ausgebildet sein können. Darüber hinaus können auch gefüllte (verstärkte) und ungefüllte hochtemperaturbeständige thermoplastische Kunststoffe, wie z.B. Polyätherimid PEI, Verwendung finden.

Zur Bildung einer staubsicheren Energieführungskette kann eine erfindungsgemäße Energieführungskette zusätzlich in einen elastischen Schlauch, insbesondere einen Schrumpfschlauch, eingeschoben sein.

**Patentansprüche**

1. Energieführungskette zur Führung von Energieleitern, insbesondere Kabeln und Schläuchen, deren Kettenglieder (1) kastenförmig ausgebildet und abwechselnd mit Zapfen (5) und kreisförmigen Öffnungen (4) versehen sind, wobei die Zapfen (5) eines Kettengliedes (1) in die Öffnungen (4) des benachbarten Kettengliedes eingreifen und die Verschwenkbarkeit aufeinanderfolgender Kettenglieder gegeneinander - von denen jedes aus zwei Seitenplatten (2) und zwei gleich ausgebildeten, im Querschnitt C-förmigen Querstegen (3) aus thermoplastischem Kunststoff zusammengesteckt ist - durch Anschläge begrenzt ist, und wobei die Kettenglieder (1) als modulares System aufgebaut sind, dadurch gekennzeichnet, daß auf den Seiten um 180° versetzt zueinander angeordnete, identische Seitenteile (2) mit beidseits der Plattenebene angeordneten Zapfen (5) vorgesehen sind, deren mit den Querstegenden verrastende Vorsprünge (10) symmetrisch zur Mittelebene zwischen den Achsen der Schwenkzapfen (5) bzw. Öffnungen (4) ausgebildet sind, und daß die Endabschnitte (20) der Querstege (3) mit Rastwülsten (14) versehene U-Klammern (13) bilden, die zwischen dem Seitenteil (2) und einer - eine Abzugsbegrenzung bildenden - verbreiterten Stirnwand (11) auf die Vorsprünge (10) der Seitenteile (2) aufsprengbar sind, die - ebenso wie die Stirnwand (11) - mit nach oben abgeschrägten Seitenkanten (16) versehen sind.

2. Energieführungskette nach Anspruch 1, dadurch gekennzeichnet, daß Endabschnitte der Querstege (3, 3') mit, die federnden Schenkel (13) der U-Klammern bildenden, Schlitzen (12) versehen sind.

3. Energieführungskette nach Anspruch 1 oder 2, dadurch gekennzeichnet, daß die Querstege (3, 3') einen, vorzugsweise verschmälerten U-förmigen Mittelabschnitt (19) mit Innenverzahnungen (21) der Seitenschenkel zur verstellbaren Halterung von Trennstegen (22) aufweisen.

4. Energieführungskette nach Anspruch 3, dadurch gekennzeichnet, daß die Trennstege (22) an beiden Eingriffsenden mit verbreiterten, U-förmigen Gleiteingriffsköpfen (23) mit im Übergangsbereich zum Stegmittelabschnitt (24) angeordneten Nasen (25) zum Eingreifen in die Innenverzahnung (21) der Querstege (3, 3') versehen sind.

5. Energieführungskette nach Anspruch 3 oder 4, gekennzeichnet durch der Führung der Energieleitungen dienende auf die Trennstege (22) aufgeklebte Schaumstoffoder Moosgummistreifen (26).

**6.** Energieführungskette nach einem der Ansprüche 1 bis 5, dadurch gekennzeichnet, daß die Zapfen (5) zur Verbindung benachbarter Ketten durchbohrt sind.

**7.** Energieführungskette nach einem der Ansprüche 1 bis 6, dadurch gekennzeichnet, daß die Seitenteile (2) und die Querstege (3, 3') aus glas- oder kohlefaserverstärktem Polyamid bestehen.

**8.** Energieführungskette nach einem der Ansprüche 1 bis 7, dadurch gekennzeichnet, daß die Anschlagkanten (6, 8) mit einem vorzugsweise aufgespritzten Dämpfungsüberzug aus einem weicheren Kunststoff versehen sind.

**9.** Energieführungskette nach einem der Ansprüche 1 bis 8, dadurch gekennzeichnet, daß die Querstege (3') aus zwei Teilen zusammensteckbar sind, von denen das eine Teil einen, den Mittelabschnitt (19) mit Verzahnungen (21) für Trennstege (22) bildenden abtrennbaren langen Steg und das andere eine dessen Ende (20) halternd aufnehmende, mit Gegenverzahnungen (30) versehene Ausnehmung (29) aufweist.

**10.** Energieführungskette nach einem der Ansprüche 1 bis 9, dadurch gekennzeichnet, daß der Mittelabschnitt (19) der Querstege (3, 3') gegenüber den Aufsteckenden (20) nach oben abgekröpft ist.

**11.** Energieführungskette nach einem der Ansprüche 1 bis 10, dadurch gekennzeichnet, daß die zur Bildung einer geschlossenen Kette (Rohr) verbreitert als Deckel (31) ausgebildeten Querstege (3, 3') Zweikomponenten-Bauteile sind, die im Überlappungsbereich auf einer Seite aus weicherem Kunststoff bestehende, Dichtlippen bildende Abschnitte (32) aufweisen.

**12.** Energieführungskette nach einem der Ansprüche 1 bis 11, dadurch gekennzeichnet, daß sie in einen Schlauch, insbes. einen Schrumpfschlauch, eingeschoben ist.

**Claims**

**1.** Energy conveying chain for conveying energy conductors, more particularly cables and hoses, the chain links (1) of said energy conveying chain being box-shaped and being alternately provided with journals (5) and circular openings (4), the journals (5) of one chain link (1) engaging in the openings (4) of the adjacent chain link and the pivotability of successive chain links relative to one another - each of said chain links being assembled from two side plates (2) and two identical crosspieces (3) having a C-shaped cross section and made of thermoplastics material - being limited by abutments, and the chain links (1) being designed as a modular system, characterised in that on the sides identical side plates (2) arranged offset through 180° relative to one another are provided with journals (5) arranged ether side of the plate plane, the projections (10) of the side plates (2) locking with the crosspieces being designed symmetrical to the central plane between the axes of the pivot journals (5) and openings (4), and the end sections (20) of the crosspieces (3) form U-clamps (13) which are provided with locking beads (14) and which between the side element (2) and an enlarged end wall (11) - forming a withdrawal boundary - can be clamped onto the projections (10) of the side elements (2), which - like the end wall (11) - are provided with lateral edges (16) bevelled at the top.

**2.** Energy conveying chain according to claim 1, characterised in that the end section of the crosspieces (3,3') are provided with slots (12) forming the resilient limbs of the U-clamps.

**3.** Energy conveying chain according to claim 1 or 2, characterised in that crosspieces (3,3') comprise a preferably constricted U-shaped middle section (19) with an inner toothing on the lateral limb for adjustably holding separating webs (22).

**4.** Energy conveying chain according to claim 3, characterised in that the separating webs (22) are provided at both engagement ends with enlarged, U-shaped sliding engagement heads (23) with noses (25) arranged in the transition region to the central web section (24) for engaging in the inner toothing (21) of the crosspieces (3,3').

**5.** Energy conveying chain according to claim 3 or 4, characterised by foam or rubber sponge strips (26) adhered to the separating webs (22) and used for conveying the energy conductors.

**6.** Energy conveying chain according to claims 1 to 5, characterised in that the journals (5) are provided with through bores for connecting adjacent chains.

**7.** Energy conveying chain according to one of claims 1 to 6, characterised in that the side elements (2) and the crosspieces (3,3') are made of glass-reinforced or carbon fibre-reinforced polyamide.

8. Energy conveying chain according to one of claims 1 to 7, characterised in that the striking edges (6,8) are provided with a damping covering preferably sprayed on and made of soft plastics material.

9. Energy conveying chain according to one of claims 1 to 8, characterised in that the crosspieces (3') can be assembled from two parts, one part comprising a detachable long web forming the central section (19) with toothing (21) for separating webs (22) and the other part comprising a recess (29) provided with a counter toothing (30) and receiving and holding the end (20) of the crosspiece.

10. Energy conveying chain according to one of claims 1 to 9, characterised in that the central section (19) of the crosspieces (3,3') is upwardly offset relative to the attachment ends (20).

11. Energy conveying chain according to one of claims 1 to 10, characterised in that the crosspieces (3,3') enlarged as lids (31) to form a closed chain (tube) are two-component elements comprising sections (32) made of soft plastics material forming sealing lips in the overlap region on one side.

12. Energy conveying chain according to one of claims 1 to 11, characterised in that the chain is pushed into a hose, more particularly a shrinking hose.

**Revendications**

1. Chaîne de guidage d'énergie pour le guidage de conducteurs d'énergie, notamment de câbles et de tuyaux souples, dont les maillons (1) sont réalisés en forme de boîtes et sont équipés alternativement de tétons (5) et d'ouvertures circulaires (4), et dans laquelle les tétons (5) d'un maillon (1) s'engagent dans les ouvertures (4) du maillon voisin et la capacité de pivotement réciproque de maillons successifs - dont chacun est constitué de deux plaques latérales (2) et de deux barrettes transversales (3) de constitution identique, en matière synthétique thermoplastique et possédant une forme de C en coupe transversale - est limitée par des butées, et dans laquelle les maillons (1) sont agencés sous la forme d'un système modulaire, caractérisée en ce que des éléments latéraux identiques (2) disposés en étant décalés réciproquement de 180° sur les côtés sont équipés de tétons (5), disposés des deux côtés du plan de la plaque et dont les parties saillantes (10), qui s'encliquettent avec les extrémités des barrettes transversales, sont symétriques par rapport au plan médian passant entre les axes des tétons pivotants (5) ou des ouvertures (4), et que les sections terminales (20) des barrettes transversales (3) forment des pinces en forme de U (13) équipées de renflements d'encliquetage (14), qui peuvent être emmanchés à force entre l'élément latéral (2) et une paroi frontale élargie (11) - qui constitue un élément de limitation de tirage - sur les parties saillantes (10) des éléments latéraux (2), qui - tout comme la paroi frontale (11) - sont équipés de bords latéraux (16) s'étendant obliquement vers le haut.

2. Chaîne de guidage d'énergie selon la revendication 1, caractérisée en ce que des sections d'extrémité des barrettes transversales (3,3') sont pourvues de fentes (12) qui forment les branches élastiques (13) des pinces en forme de U.

3. Chaîne de guidage d'énergie selon la revendication 1 ou 2, caractérisée en ce que les barrettes transversales (3,3') possèdent une section médiane en forme de U (19), de préférence rétrécie et comportant des dentures intérieures (21) que portent les branches latérales et qui servent à retenir d'une manière réglable des barrettes de séparation (22).

4. Chaîne de guidage d'énergie selon la revendication 3, caractérisée en ce que les barrettes de séparation (22) sont pourvues, aux deux extrémités de venue en prise, de têtes élargies de venue en prise avec glissement (23) en forme de U comportant des ergots (25) disposés dans la zone de jonction avec la section médiane (24) de barrette et destinés à venir en prise dans la denture intérieure (21) des barrettes transversales (3, 3').

5. Chaîne de guidage d'énergie selon la revendication 3 ou 4, caractérisée par des bandes de matériau alvéolaire ou de caoutchouc mousse (26) utilisées pour le guidage des conducteurs d'énergie et collées sur les barrettes de séparation (22).

6. Chaîne de guidage d'énergie selon l'une des revendications 1 à 5, caractérisée en ce que les têtons (5) sont percés pour la liaison de chaînes voisines.

7. Chaîne de guidage d'énergie selon l'une des revendications 1 à 6, caractérisée en ce que les éléments latéraux (2) et les barrettes transversales (3,3') sont réalisés en un polyamide renforcé par des fibres de verre ou de carbone.

8. Chaîne de guidage d'énergie selon l'une des revendications 1 à 7, caractérisée en ce que les bords de butée (6,8) sont pourvus d'un revêtement amortisseur de préférence moulé par injection et réalisé en une matière synthétique plus molle.

9. Chaîne de guidage d'énergie selon l'une des revendications 1 à 8, caractérisée en ce que les barrettes transversales (3') sont formées par la réunion par enfichage de deux parties, dont l'une comporte une longue barrette pouvant être sectionnée et constituant la section centrale (19) pourvue de dentures (21) pour des barrettes de séparation (22), et dont l'autre possède un évidement (29) qui reçoit, de manière à la fixer, l'extrémité (20) de la barrette et est pourvue de dentures antagonistes (30).

10. Chaîne de guidage d'énergie selon l'une des revendications 1 à 9, caractérisée en ce que la section médiane (19) des barrettes transversales (3,3') est recourbée vers le haut par rapport aux extrémités d'enfichage (20).

11. Chaîne de guidage d'énergie selon l'une des revendications 1 à 10, caractérisée en ce que les barrettes transversales (3,3') qui sont élargies sous la forme d'un couvercle (31) pour former une chaîne fermée (tube), sont des parties constitutives formées de deux composants, qui possèdent dans la zone de chevauchement, des sections (32) qui sont constituées d'un côté par une matière synthétique plus molle et forment des lèvres d'étanchéité.

12. Chaîne de guidage d'énergie selon l'une des revendications 1 à 11, caractérisée en ce qu'elle est enfilée dans un tuyau souple, par exemple un tuyau souple rétractable.

FIG. 1

FIG. 2

FIG. 3

FIG. 4

FIG.5

FIG. 6

FIG. 7

FIG. 8

FIG. 9

FIG. 10

FIG. 11

FIG. 12

EP 0 308 958 B1